# EUROPÄISCHE PATENTSCHRIFT

(11) **EP 1 362 197 B1**
(45) Veröffentlichungstag und Bekanntmachung des Hinweises auf die Patenterteilung: **08.12.2004**
(21) Anmeldenummer: 02712920.4
(22) Anmeldetag: 20.02.2002
(51) Int. Cl.: F16F 9/32

(54) **KOLBEN MIT STÜTZSTEGEN FÜR EINE KOLBEN-ZYLINDER-ANORDNUNG, INSBESONDERE STOSSDÄMPFERKOLBEN**
PISTON WITH SUPPORTING CONNECTOR ELEMENTS FOR A PISTON-CYLINDER ARRANGEMENT, ESPECIALLY A SHOCK ABSORBER PISTON
PISTON COMPORTANT DES NERVURES DE SUPPORT POUR UN ENSEMBLE PISTON-CYLINDRE, NOTAMMENT PISTON D'AMORTISSEUR

(30) Priorität: 21.02.2001 DE 10108246
(43) Veröffentlichungstag der Anmeldung: 19.11.2003
(73) Patentinhaber: GKN Sinter Metals Holding GmbH, 42477 Radevormwald (DE)
(72) Erfinder: MAY, Ewald, 53175 Bonn (DE)
(74) Vertreter: Maxton Langmaack & Partner
(86) Internationale Anmeldenummer: PCT/EP2002/001769
(87) Internationale Veröffentlichungsnummer: WO 2002/066857

(56) Entgegenhaltungen:
- EP-A- 0 658 611
- WO-A-00/34681
- DE-A- 19 847 342
- DE-A- 19 847 343
- GB-A- 686 705
- US-A- 5 520 092
- US-A- 5 611 260

## Beschreibung

Aus EP-A-0 658 611 ist ein Stoßdämpferkolben bekannt, der einen Kolbenkörper aufweist, der auf seiner Umfangsfläche mit einem umlaufenden Steg versehen ist, an den sich eine Vielzahl von in Achsrichtung verlaufenden Stegen auf einer Seite des umlaufenden Stegs anschließt. Auf diesen Kolbenkörper ist im Spritzgießverfahren eine Dichtung aus thermoplastischem Kunststoff aufgespritzt, wobei insbesondere die sich in axialer Richtung erstreckenden Stege mit ihren dazwischen liegenden, voll mit Dichtungswerkstoff ausgefüllten Nuten der zuverlässigen Verankerung des Dichtungswerkstoffs und der Führung des Kolbens dienen. Die im Spritzguß aufgebrachte Dichtung ermöglicht eine enge Tolerierung, um das sogenannte "blow-by" zu vermeiden und so eine zuverlässige Abdichtung der einander zugeordneten Zylinderräume zu bewirken. Das Verfahren zur Herstellung derartiger spritzgegossener Dichtungen ist verhältnismäßig aufwendig.

Aus US-A-3 212 411 ist eine Kolben-Zylinder-Anordnung bekannt, deren Kolbenkörper auf seiner Umfangsfläche eine Vielzahl von umlaufenden Rillen aufweist. Zum Aufbringen der Dichtung ist ein napfförmiger Vorformling aus PTFE (Polytetrafluorethylen) vorgesehen, der zunächst auf den Kolbenkörper lose aufgesetzt wird. Der so vorbereitete Kolbenkörper wird anschließend zunächst in einen hoch aufgeheizten Formund Kalibrierzylinder eingedrückt, wobei unter Wärmeeinfluß das PTFE-Material in die Rillen auf der Umfangsfläche des Kolbenkörpers eingepreßt wird. Anschließend wird der Kolbenkörper mit der aufgepreßten Dichtung in einem entsprechend ausgebildeten Kühlzylinder abgekühlt. Die Rillen sind vollständig mit dem Dichtungswerkstoff ausgefüllt, um so eine formschlüssig-feste Verbindung der Dichtung mit der Umfangsfläche des Kolbenkörpers zu bewirken. Für den Einsatz als Stoßdämpferkolben muß anschließend noch die die Stirnfläche des Kolbenkörpers auf einer Seite überdeckende Bodenfläche des Vorformling entfernt werden.

Aus EP-A-682 190 ist ein Stoßdämpferkolben bekannt, der sich in seiner Herstellung von dem vorstehend beschriebenen Verfahren im wesentlichen nur dadurch unterscheidet, daß zum Aufbringen der Dichtung statt eines napfförmigen Vorformlings eine gestanzte Kreisringscheibe eingesetzt wird. Diese Kreisringscheibe wird auf ein Ende des Kolbenkörpers aufgesetzt. Der so vorbereitete Kolbenkörper wird wiederum in einen aufgeheizten Form- und Kalibrierzylinder eingepreßt, wobei die Kreisringscheibe als Band auf die Umfangsfläche des Kolbenkörpers umgelegt und anschließend in die in Umfangsrichtung des Kolbenkörpers verlaufenden Rillen unter Wärmeeinfluß eingepreßt wird. Anschließend wird der mit seiner aufgepreßten Dichtung versehene Kolben durch ein Kühlrohr geführt. Der Dichtungswerkstoff füllt auch hierbei die Rillen praktisch vollständig aus, so daß die Dichtung formschlüssig-fest mit der Umfangsfläche des Kolbenkörpers verbunden ist.

Die beiden vorstehend beschriebenen Verfahren weisen den Nachteil auf, daß für das Umformen und das Einpressen des Dichtungsmaterials in die Rillen auf der Umfangsfläche des Kolbenkörpers erhebliche Preßdrücke erforderlich sind und das die Dichtung bildende Dichtungsmaterial starken Umformungen unterworfen wird, die nachteilig die Struktur des Dichtungswerkstoffs beeinflußt.

Aus dem nächstliegenden Stand der Technik, Dokument DE-198 47 342A ist ein Kolben für eine Kolben-Zylinder-Anordnung, insbesondere Stoßdämpferkolben bekannt, mit einem Kolbenkörper, der auf seiner Umfangsfläche in einem an ein Kolbenende angrenzenden Bereich mit wenigstens einem umlaufenden, die Umfangsfläche überragenden Umlaufsteg versehen ist, an den sich in Richtung auf das andere Kolbenende erstreckende, parallel mit Abstand nebeneinander angeordnete längslaufende Stützstege anschließen, wobei jeweils zwei benachbarte Stützstege eine nutförmige Ausnehmung begrenzen, die an ihren dem Umlaufsteg abgewandten Enden in Längsrichtung offen sind, und mit einer manschettenförmigen Dichtung aus einem warmverformbaren Dichtungsmaterial, die auf den Kolbenkörper so aufgeformt ist, daß sowohl der Umfangssteg als auch die Stützstege zumindest über einen Teil ihrer Höhe in das Material der Dichtung eingeformt sind.

Diese vorbekannte Lösung hat gezeigt, daß es für eine gute Abdichtung zwischen der manschettenförmigen Dichtung des Kolbens einerseits und der Innenwandung des Zylinders andererseits nicht erforderlich ist, daß die Dichtung auf der vollen Höhe des Kolbenkörper anliegt. Es genügt, wenn sich die Dichtmanschette in Umfangsrichtung auf dem relativ schmalen Umlaufsteg fest abstützt. Es hat sich ferner überraschenderweise herausgestellt, daß es für eine einwandfreie und zuverlässige Verbindung zwischen Dichtung und Kolbenkörper nicht erforderlich ist, daß die nutförmigen Ausnehmungen zwischen den längslaufenden Stützstegen vom Dichtungsmaterial vollständig ausgefüllt sind, wie dies aus EP-A-0 685 611 bekannt ist.

Es hat sich für Stoßdämpferkolben, auf die die manschettenförmige Dichtung in der in EP-A-682 190 beschriebenen Weise aufgeformt wird, ferner herausgestellt, daß es genügt, wenn außer dem Umlaufsteg auch die längslaufenden Stützstege nur über einen Teil ihrer Höhe in das Material der Dichtung eingeformt werden. Einerseits ergibt sich hierbei ein einwandfreier Formschluß zwischen der manschettenförmigen Dichtung und dem Kolbenkörper, und zwar sowohl in Längsrichtung als auch in Umfangsrichtung und zum anderen nur eine mäßige Umformung des Dichtungsmaterials, so daß nicht nur geringere Preßkräfte aufzubringen sind, sondern auch in wesentlich geringerem Maße ein Materialfluß bei der Umformung erfolgt und damit eine nachteilige Beeinflussung der Materialstruktur praktisch vermieden wird. Selbst bei einer Umformung der Kreisringscheibe in einem solchen Maße, daß die nutförmigen Ausnehmungen vollständig ausgefüllt werden, ergibt sich durch die in der in Erstreckung der Ausnehmung erfolgenden Bewegung des Kolbenkörpers eine Umformung des Dichtungsmaterials in Querrichtung und somit ein günstiger "Materialfluß", so daß auch bei dieser Umformung eine nachteilige Beeinflussung der Materialstruktur vermieden wird. Da durch die nur teilweise Einformung der Stützstege in das Dichtungsmaterial die dazwischen liegenden nutförmigen Ausnehmungen nicht vollständig ausgefüllt werden, verbleibt ein genügender Freiraum, in dem das Dichtungsmaterial bei Ausdehnungen infolge Temperaturerhöhungen ausweichen kann, der Kolben jedoch über die längslaufenden Stützstege einwandfrei geführt ist. Zweckmäßig ist es hierbei, wenn sich die Längsstege bis an das Ende des Kolbenkörpers erstrecken.

Der Erfindung liegt die Aufgabe zugrunde, einen verbesserten Kolben, insbesondere Stoßdämpferkolben zu schaffen.

Diese Aufgabe wird gemäß der Erfindung durch einen Kolben mit den Merkmalen des Anspruchs 1 gelöst.

Weitere Ausgestaltungen der Erfindung sind in der nachfolgenden Beschreibung von Ausführungsbeispielen und den Unteransprüchen angegeben.

Die Erfindung wird anhand schematischer Zeichnungen eines Ausführungsbeispiels näher erläutert. Es zeigen:
- Fig. 1: einen Teilschnitt in Achsrichtung durch eine Kolben-Zylinder-Anordnung für einen Stoßdämpfer,
- Fig. 2: eine Seitenansicht, teilweise im Schnitt, eines Kolbens für einen Stoßdämpfer in einer ersten Ausführungsform,
- Fig. 3: einen Horizontalschnitt durch den Kolben gemäß der Linie III-III in Fig. 2 ohne Dichtmanschette,
- Fig. 4: einen Teilschnitt gem. der Linie IV-IV in Fig. 3,
- Fig. 5: eine Seitenansicht, teilweise im Schnitt, eines Kolbens in einer zweiten Ausführungsform,
- Fig. 6: einen Horizontalschnitt durch den Kolben gemäß der Linie VI-VI in Fig. 5,
- Fig. 7: eine Ausführungsform mit einem Umlaufsteg in Form eines aufgesetzten Ringes.

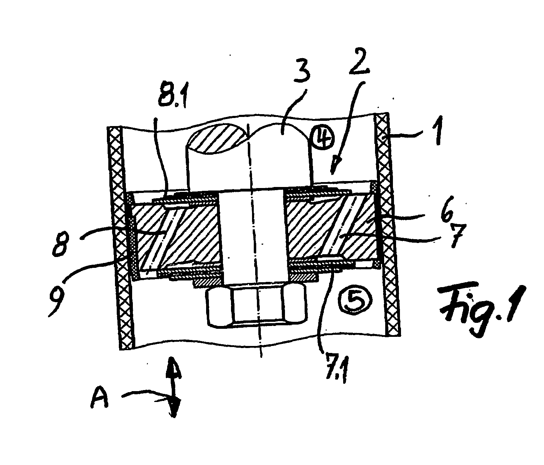

Fig. 1 zeigt als Funktionsschema einen axialen Schnitt durch einen Stoßdämpfer, der zwei relativ zueinander bewegbare Teile, beispielsweise eine Fahrzeugachse und einen Fahrzeugrahmen miteinander verbindet. Der Stoßdämpfer weist einen Zylinderteil 1 auf, der mit einem der beiden relativ zueinander bewegbaren Teile verbunden ist. Im Zylinder 1 ist ein Kolben 2 geführt, der an einer Kolbenstange 3 befestigt ist, die mit ihrem freien Ende am anderen Teil der beiden relativ zueinander bewegbaren Teile festgelegt ist. Der Zylinder 1 ist hierbei beidseitig geschlossen und mit einer Hydraulikflüssigkeit gefüllt, so daß die Kolben-zylinder-Anordnung doppelt wirkend ausgelegt ist, wobei der Kolben zwei Zylinderräume 4, 5 voreinander trennt.

Der Kolbenkörper 6 des Kolbens 2 weist mehrere nebeneinander verlaufende Durchtrittskanäle 7, 8 auf. Die Durchtrittskanäle 7, 8 sind jeweils auf ihrer in der Funktion noch zu erläuternden Austrittsseite mit einem Drosselventil 7.1 bzw. 8.1 abgedeckt. Die Anordnung ist hierbei so getroffen, daß jeweils mehrere Durchtrittskanäle 7 und mehrere Durchtrittskanäle 8 alternierend um die Zylinderachse angeordnet vorgesehen sind.

Die Umfangsfläche des Kolbens 2 ist mit einer manschettenförmigen Dichtung 9 versehen, die für eine Abdichtung des Zylinderraums 4 gegenüber dem Zylinderraum 5 sorgt. Bei einer Bewegung des Kolbens 2 in den Zylinderraum 4 hinein, wird die Flüssigkeit durch die Durchtrittskanäle 7 gegen die Rückstellkraft der Drosselventile 7.1 gepreßt. Die Durchtrittsöffnungen 8 werden hierbei durch den auf die Drosselventile 8.1 lastenden Druck des Flüssigkeitsraums 4 verschlossen gehalten. Bei einer Bewegung in umgekehrter Richtung werden die Durchtrittskanäle 7 durch die Drosselventile 7.1 geschlossen, während die Flüssigkeit durch die durchströmenden Kanäle 8 aus dem Zylinderraum 5 in den Zylinderraum 4 zurückströmen kann.

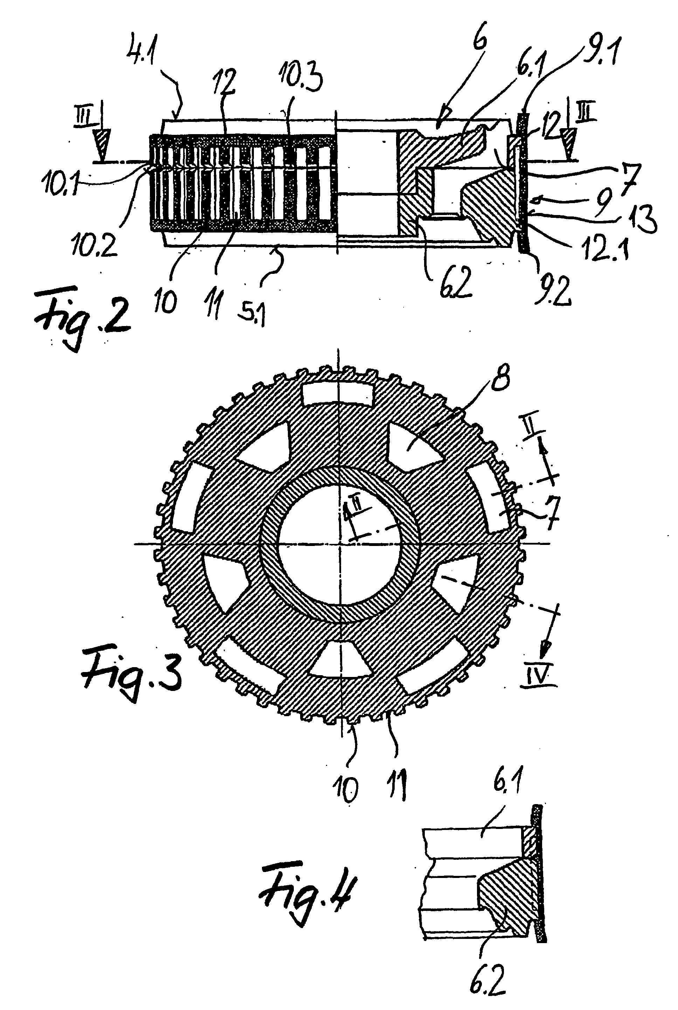

In Fig. 2 ist eine Seitenansicht einer erfindungsgemäßen Ausführung des Kolbens 2 in Fig. 1 ohne die Anordnung der Drosselventile 7.1 und 8.1 wiedergegeben. Die Aufsicht gemäß Fig. 3 zeigt den Kolben 2 ohne die Dichtung 9, um die Struktur der Kolbenumfangsfläche zu zeigen. Die Teilschnittdarstellung in Fig. 2 zeigt den Kolben mit der Dichtung 9.

Der Kolbenkörper 6 ist auf seiner Umfangsfläche mit einer Vielzahl von längslaufenden Stützstegen 10 versehen, die jeweils entsprechende nutförmige Ausnehmungen 11 begrenzen. Bei dem hier dargestellten Ausführungsbeispiel sind die nutförmigen Ausnehmungen 11 so angeordnet, daß sie sich von einer der Stirnflächen, der ein erster Umlaufsteg 12 zugeordnet ist, beispielsweise der Stirnfläche 5.1 des Kolbenkörpers 6 bis an einen zweiten Umlaufsteg 12.1 erstrecken, der am anderen Ende des Kolbenkörpers 6 im Bereich nahe oder an der Stirnfläche 4.1 angrenzend in Umfangsrichtung verläuft und die nutförmigen Ausnehmungen 11 an diesem Kolbenende begrenzt. Die Umlaufstege 12 und die längslaufenden Stützstege 10, die eine Außenfläche des Kolbenkörpers 6 bilden, sind niveaugleich. Aus Gründen einer besseren Darstellung ist diese Außenfläche mit einer Schraffur versehen. Die Stützstege 10 und entsprechend die Nuten 11 können, wie dargestellt, achsparallel verlaufen oder unter einem Winkel zur Bewegungsachse des Kolbens 2 ausgerichtet sein.

Die auf dem Umfang des Kolbenkörpers 6 angeordnete manschettenförmige Dichtung 9 besteht aus einem warmverformbaren Kunststoff, vorzugsweise aus PTFE. Die manschettenförmige Dichtung 9 ist bei dem hier dargestellten Ausführungsbeispiel durch Warmumformung auf den Kolbenkörper 6 aufgeformt worden.

Bei der Warmumformung des Dichtungsmaterials, das aus einer vorkonfektionierten Kreisringscheibe oder einem vorkonfektionierten Rohrstück bestehen kann, werden die Stützstege 10 und die Umlaufstege 12 nur über einen Teil ihrer Höhe in das Material der manschettenförmigen Dichtung 9 eingeformt, so daß zwischen dem Material der Dichtung 9 und dem Boden nutförmigen Ausnehmungen 11 noch ein gewisser Freiraum verbleibt, so daß beim Formen der Dichtung 9 das Dichtungsmaterial frei und ohne Zwängung in die Nut 11 einfließen kann. Bei diesem Umformungsvorgang wird die zylindrische Außenfläche 13 der Dichtung 9 gleichzeitig kalibriert, so daß die gewünschten Toleranzen zum Innendurchmesser des Zylinders 1 eingehalten werden können. Da insbesondere bei der Verwendung einer derartigen Kolben-Zylinder-Anordnung als Stoßdämpfer im Betrieb eine Erwärmung des Gesamtsystems auftritt, erlaubt dieser verbleibende Freiraum im Nutgrund innerhalb gewisser Grenzen auch eine Ausdehnung des Dichtungsmaterials in die Nut hinein, so daß der Verschleiß der Dichtung auf der an die Ränder angrenzenden zylindrischen Umfangsfläche der Dichtung 9 herabgesetzt wird. Der Kolben 2 ist über seine Höhe insgesamt praktisch kippfrei abgestützt. Die Dichtung 9 stützt sich jeweils an den Nutenenden der Innenseite des jeweiligen Umlaufstegs 12 ab.

In Fig. 3 ist der Kolben 2 in einem Horizontalschnitt gem. der Linie III-III in Fig. 2 mit abgenommener Dichtung 9 dargestellt, so daß die Struktur von Stützstegen 10 und Nuten 11 erkennbar ist.

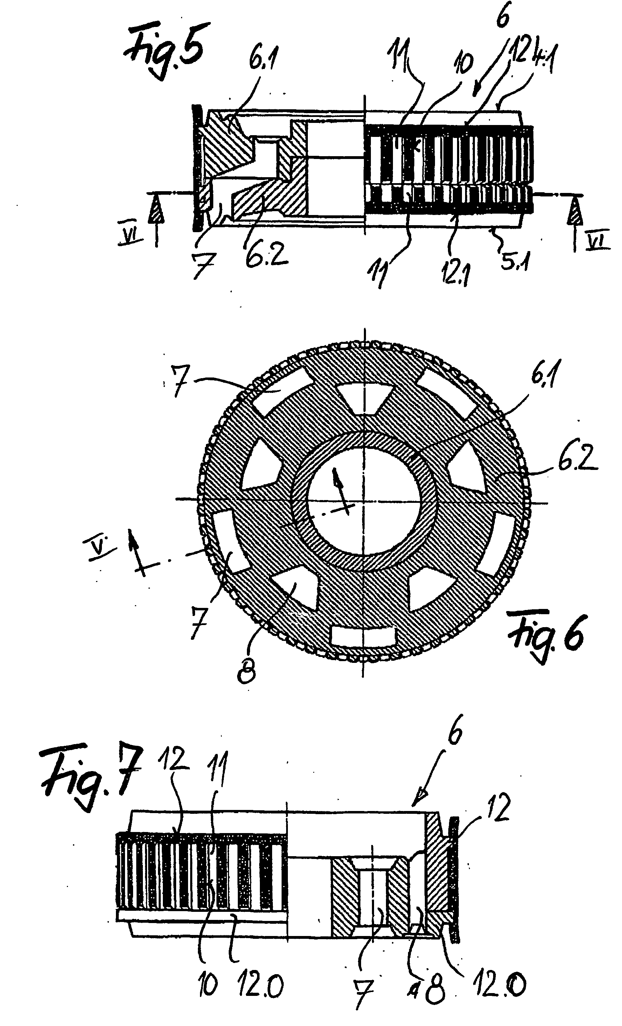

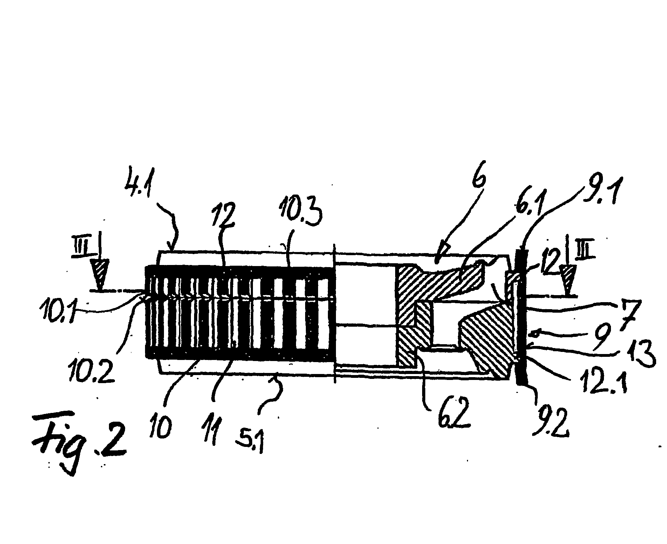

Fig. 2 und 3 sowie die Darstellung des Kolbens 2 im Teillängsschnitt gemäß Fig. 4 lassen erkennen, daß die manschettenförmige Dichtung 9 so auf den Kolbenkörper 6 aufgeformt ist, daß sowohl die Umlaufstege 12 als auch die längslaufenden Stützstege 10 nur über einen Teil ihrer Höhe in das Dichtungsmaterial eingeformt sind, so daß jeweils an den nutförmigen Ausnehmungen 11 zwischen der Innenfläche der manschettenförmigen Dichtung 9 und dem Grund der nutförmigen Ausnehmungen 11 ein geringer Freiraum verbleibt (rechte Seite der Fig. 2). Die längslaufenden Stützstege 10 sind jedoch durchgehend in gleicher Dicke wie die Umlaufstege 12 mit der manschettenförmigen Dichtung 9 abgedeckt. Die ausgestellten gegenüber dem Kolbenkörper 6 freiliegenden Ränder 9.1 bzw. 9.2 der Dichtung 9 bewirken, daß diese sich jeweils bei Druckbeaufschlagung der Dichtung 9 geringfügig aufweiten und die Abdichtung zwischen Kolben und Zylinderwand verbessern. Je nach den Betriebsanforderungen kann es ausreichen, nur einen freistehenden Rand der Dichtung 9 vorzusehen.

Um nun eine derartige Nut-Steg-Anordnung, die endseitig durch die Umlaufstege 12 und 12.1 begrenzt ist, günstig herstellen zu können, ist es zweckmäßig, zumindest einen der Umlaufstege 12 bzw. 12.1 als gesonderten Ring 12.0 herzustellen und nach der Formgebung des Kolbenkörpers 6 auf diesen als stegförmige Begrenzung der Nuten 11 aufzuschieben und festzulegen, wie dies in Fig. 7 dargestellt ist. Es ist aber auch möglich, einen Kolbenkörper herzustellen, der nur die längslaufenden Stützstege 10 aufweist und auf diesen jeweils endseitig einen Ring aufzuschieben, dem den Umlaufsteg aufweist.

Ein derartiger Kolbenkörper 6 kann bevorzugt aus einem, insbesondere aber aus zwei pulvermetallurgisch hergestellten Teilelementen 6.1 und 6.2 gebildet werden. Die Teilelemente 6.1 und 6.2 werden aus einem sintermetallurgischen Pulver gepreßt. Die gepreßten und gesinterten Teilelemente werden dann in einer Fügeoperation entsprechend zusammengefügt. Der zusammengefügte Preßling wird anschließend kalibriert, so daß beide Teilelemente 6.1 und 6.2 fest miteinander verbunden sind. Dieses Verfahren ist auch bei der vorstehend beschriebenen Gestaltung mit dem Ring 12.0 anwendbar. Die Formgebung derartiger Geometrien ist mit kostengünstigen Werkzeugen herzustellen.

Um die Scherbelastbarkeit der Verbindung zwischen dem Kolben 2 und der Dichtung 9 zu verbessern, sind die einander zugekehrten Enden 10.1 und 10.2 der den einzelnen Teilelementen 6.1 und 6.2 zugeordneten Stegteile abgeschrägt, wie dargestellt, oder stufenförmig abgesetzt, so daß die Stege 10 in diesem Bereich jeweils unterbrochen sind. Bei der Anformung, insbesondere einer Warmanformung des Materials der Dichtung 9 wird dieses in die Unterbrechung entsprechend eingeformt, so daß sich, bezogen auf die Bewegungsrichtung des Kolbens 2 (Doppelpfeil A in Fig. 1), ein zusätzlicher Formschlußbereich in Form einer sogenannten Verkrallung ergibt. In diesem Bereich ist die praktisch bis auf den Grund der durch Abschrägungen 10.1 und 10.2 begrenzende Stoßnut 10.3 durchgeformt.

Die in Fig. 5 und Fig. 6 dargestellte Ausführungsform der Erfindung entspricht in Aufbau und Funktion der Ausführungsform gem. Fig. 2, 3 und 4. Der Unterschied besteht bei dieser Ausführungsform darin, daß die beiden Teilelemente 6.1 und 6.2 um eine Nutteilung der Nuten 11 versetzt zusammengefügt sind und so der auf Scherung belastete Querschnitt des in die jetzt versetzt zueinander angeordneten Nutenbereiche eingeformten Dichtungsmaterials vergrößert wird.

Dieser Nutversatz muß allerdings bei der Formgebung eines Teilelementes hinsichtlich des Verlaufs der Kanäle 7 und 8 berücksichtigt werden. Auch bei dieser Ausführungsform ist es zweckmäßig, wenn die einander zugekehrten Enden der Stützstege 10 abgeschrägt oder abgerundet sind.

## Patentansprüche

1. Kolben für eine Kolben-Zylinder-Anordnung, insbesondere Stoßdämpferkolben, mit einem Kolbenkörper (6), der auf seiner Umfangsfläche an beiden jeweils ein Kolbenende begrenzenden Bereichen mit einem umlaufenden, die Umfangsfläche überragenden Umlaufsteg (12) versehen ist, an den sich in Richtung auf das andere Kolbenende erstreckende, parallel mit Abstand nebeneinander angeordnete, längslaufende Stützstege (10) anschließen, wobei jeweils zwei benachbarte Stützstege (10) eine nutförmige Ausnehmung (11) begrenzen, und mit einer manschettenförmige Dichtung (9) aus einem warmverformbaren Dichtungsmaterial, die auf den Kolbenkörper (6) so aufgeformt ist, daß sowohl die Umlaufstege (12) als auch die Stützstege (10) zumindest über einen Teil ihrer Höhe in das Material der manschettenförmigen Dichtung (9) eingeformt sind, **dadurch gekennzeichnet, daß** der Kolben (6) in einer Teilungsebene quer zur Achse in zwei Teilelemente (6.1, 6.2) unterteilt ist, die zusammengefügt und fest miteinander verbunden sind, wobei mindestens ein Teilelement (6.1, 6.2) einen Umlaufsteg (12, 12.1) mit daran anschließenden Stützstegen (10.1, 10.2) aufweist, dem ein Teilelement (6.2) mit einem die nutförmigen Ausnehmungen (11) begrenzenden Umlaufsteg (12.1) zugeordnet ist, wobei die dem Umlaufsteg (12, 12.1) eines Teilelements (6.1, 6.2) abgekehrten Enden (10.1, 10.2) der Stützstege in der Teilungsebene unterbrochen sind.

2. Kolben nach Anspruch 1, **dadurch gekennzeichnet, daß** die Enden (10.1, 10.2) der Stützstege (10) abgeschrägt sind.

3. Kolben nach Anspruch 1 oder 2, **dadurch gekennzeichnet, daß** die Enden (10.1, 10.2) der Stützstege (10) stufenförmig abgesetzt sind.

4. Kolben nach einem der Ansprüche 1 bis 3, **dadurch gekennzeichnet, daß** die manschettenförmige Dichtung (9) wenigstens " einen freistehenden Rand aufweist, der gegenüber dem Umfangsbereich des Kolbenkörpers (6) freiliegt.

5. Kolben nach einem der Ansprüche 1 bis 4, **dadurch gekennzeichnet, daß** der Kolbenkörper (6) pulvermetallurgisch hergestellt ist.

6. Kolben nach einem der Ansprüche 1 bis 5, **dadurch gekennzeichnet, daß** die beiden Teilelemente (6.1, 6.2) jeweils mit einem Umlaufsteg (12, 12.1) und daran anschließenden Stützstegen (10) versehen sind.

7. Kolben nach einem der Ansprüche 1 bis 6, **dadurch gekennzeichnet, daß** die beiden Teilelemente (6.1, 6.2) um eine Breite der Stützstege (10) gegeneinander versetzt zusammengefügt sind.

8. Kolben nach einem der Ansprüche 1 bis 7, **dadurch gekennzeichnet, daß** die manschettenförmige Dichtung (9) aus PTFE als wärmeverformbarem Kunststoff besteht.

9. Kolben nach einem der Ansprüche 1 bis 8, **dadurch gekennzeichnet, daß** die manschettenförmige Dichtung (9) zumindest in ihrem die Stege (10, 12) überdeckenden Bereich unter Kalibrierung ihrer Außenfläche (13) aufgepreßt ist.

## Claims

1. A piston for a piston-cylinder arrangement, in particular a shock-absorber piston, with a piston body (6) which is provided on its peripheral surface, on both regions each defining a piston end, with a circumambient peripheral web (12), protruding over the peripheral surface, which web is adjoined by longitudinally-running supporting webs (10) extending in the direction of the other piston end and arranged in parallel at a distance next to each other, wherein in each case two adjacent supporting webs (10) define a groove-like recess (11), and with a sleeve-like seal (9), made of a heat-deformable sealing material, which is formed on to the piston body (6) such that both the peripheral webs (12) and the supporting webs (10) are formed, at least over part of their height, into the material of the sleeve-like seal (9), **characterised in that** the piston (6) is divided in a joint plane transversely to the axis into two partial elements (6.1, 6.2) which are assembled and securely joined together, with at least one partial element (6.1, 6.2) having a peripheral web (12, 12.1) with supporting webs (10.1, 10.2) adjoining it, with which peripheral web a partial element (6.2) with a peripheral web (12.1) defining the groove-like recesses (11) is associated, the ends (10.1, 10.2) of the supporting webs which are remote from the peripheral web (12, 12.1) of a partial element (6.1, 6.2) being interrupted in the joint plane.

2. A piston according to Claim 1, **characterised in that** the ends (10.1, 10.2) of the supporting webs (10) are bevelled.

3. A piston according to Claim 1 or 2, **characterised in that** the ends (10.1, 10.2) of the supporting webs (10) are stepped.

4. A piston according to one of Claims 1 to 3, **characterised in that** the sleeve-like seal (9) has at least one free-standing edge which stands apart from the peripheral region of the piston body (6).

5. A piston according to one of Claims 1 to 4, **characterised in that** the piston body (6) is manufactured by powder metallurgy.

6. A piston according to one of Claims 1 to 5, **characterised in that** the two partial elements (6.1, 6.2) are each provided with a peripheral web (12, 12.1) and supporting webs (10) adjoining it.

7. A piston according to one of Claims 1 to 6, **characterised in that** the two partial elements (6.1, 6.2) are assembled offset from each other by the width of the supporting webs (10).

8. A piston according to one of Claims 1 to 7, **characterised in that** the sleeve-like seal (9) is made of PTFE as heat-deformable plastics material.

9. A piston according to one of Claims 1 to 8, **characterised in that** the sleeve-like seal (9) at least in its region covering the webs (10, 12) is pressed on with calibration of its outer surface (13).

## Revendications

1. Piston pour un ensemble piston-cylindre, notamment piston d'amortisseur, comprenant un corps de piston (6) qui est doté, sur sa surface circonférentielle, au niveau des deux zones délimitant à chaque fois une extrémité de piston, d'une nervure périphérique (12), entourant et dépassant de la surface circonférentielle, à laquelle se raccordent des nervures de support (10) longitudinales, disposées parallèlement à distance les unes à côté des autres et s'étendant en direction de l'autre extrémité de piston, deux nervures de support (10) adjacentes délimitant à chaque fois une cavité (11) en forme de rainure, et comprenant un joint d'étanchéité (9) en forme de manchette composé d'un matériau d'étanchéité déformable à chaud qui est moulé sur le corps du piston (6) de telle sorte qu'aussi bien les nervures périphériques (12) que les nervures de support (10) sont noyées dans le matériau du joint d'étanchéité (9) en forme de manchette au moins sur une partie de leur hauteur,
**caractérisé en ce que**
le piston (6) est divisé, dans un plan de séparation transversal à l'axe, en deux éléments partiels (6.1, 6.2) qui sont réunis et fermement liés ensemble, au moins un élément partiel (6.1, 6.2) présentant une nervure périphérique (12, 12.1) avec des nervures de support (10.1, 10.2) raccordées à celle-ci et étant associé à un élément partiel (6.2) comprenant une nervure périphérique (12.1) délimitant les cavités (11) en forme de rainures, les extrémités (10.1, 10.2) des nervures de support tournées à l'opposé de la nervure périphérique (12, 12.1) d'un élément partiel (6.1, 6.2) étant interrompues dans le plan de séparation.

2. Piston selon la revendication 1,
**caractérisé en ce que** les extrémités (10.1, 10.2) des nervures de support (10) sont chanfreinées.

3. Piston selon la revendication 1 ou 2,
**caractérisé en ce que** les extrémités (10.1, 10.2) des nervures de support (10) sont terminées de manière étagée.

4. Piston selon l'une quelconque des revendications 1 à 3,
**caractérisé en ce que** le joint d'étanchéité (9) en forme de manchette présente au moins un bord libre qui se trouve libre par rapport à la zone circonférentielle du corps de piston (6).

5. Piston selon l'une quelconque des revendications 1 à 4,
**caractérisé en ce que** le corps de piston (6) est fabriqué par métallurgie des poudres.

6. Piston selon l'une quelconque des revendications 1 à 5,
**caractérisé en ce que** les deux éléments partiels (6.1, 6.2) sont dotés à chaque fois d'une nervure périphérique (12, 12.1) et de nervures de support (10) qui y sont raccordées.

7. Piston selon l'une quelconque des revendications 1 à 6,
**caractérisé en ce que** les deux éléments partiels (6.1, 6.2) sont assemblés de manière décalée l'un par rapport à l'autre sur une largeur des nervures de support (10).

8. Piston selon l'une quelconque des revendications 1 à 7,
**caractérisé en ce que** la matière plastique déformable à chaud composant le joint d'étanchéité (9) en forme de manchette est du PTFE.

9. Piston selon l'une quelconque des revendications 1 à 8,
**caractérisé en ce que** le joint d'étanchéité (9) en forme de manchette est inséré à force, au moins dans sa zone recouvrant les nervures (10, 12), par un calibrage de sa surface extérieure (13).
